# EUROPEAN PATENT SPECIFICATION

(11) **EP 4 018 091 B1**
(45) Date of publication and mention of the grant of the patent: **11.09.2024**
(21) Application number: 20746898.4
(22) Date of filing: 15.07.2020
(51) Int. Cl.: F03D 7/02, F03D 7/04

(54) **CONTROL SYSTEM FOR POSITIONING AT LEAST TWO FLOATING WIND TURBINES IN A WIND FARM**
STEUERUNGSSYSTEM ZUR POSITIONIERUNG VON MINDESTENS ZWEI SCHWIMMENDEN WINDTURBINEN IN EINEM WINDPARK
SYSTÈME DE COMMANDE POUR POSITIONNER AU MOINS DEUX ÉOLIENNES FLOTTANTES DANS UN PARC ÉOLIEN

(30) Priority: 22.08.2019 EP 19193197
(43) Date of publication of application: 29.06.2022
(73) Proprietor: Siemens Gamesa Renewable Energy A/S, 7330 Brande (DK)
(72) Inventor: ESBENSEN, Thomas, 7400 Herning (DK); HOEGH, Gustav, 7100 Vejle (DK); LAUGESEN, Kasper, 6700 Esbjerg (DK)
(74) Representative: SGRE-Association
(86) International application number: PCT/EP2020/069955
(87) International publication number: WO 2021/032370

(56) References cited:
- EP-A2- 2 267 297
- DK-A1- 201 470 456
- NL-C2- 2 009 682
- US-A1- 2014 044 541
- US-A1- 2018 245 564
- KHEIRABADI ALI C ET AL: "Modeling and Power Optimization of Floating Offshore Wind Farms with Yaw and Induction-based Turbine Repositioning", 2019 AMERICAN CONTROL CONFERENCE (ACC), AMERICAN AUTOMATIC CONTROL COUNCIL, 10 July 2019 (2019-07-10), pages 5458 - 5463, XP033604966

## Description

### Field of invention

The present invention relates to a control system for positioning at least two floating wind turbines in a wind farm. Further, the present invention relates to a wind farm and a method for positioning at least two floating wind turbines in a wind farm.

### Art Background

In the technical field of floating wind turbines, it is known to install a plurality of floating wind turbines in a floating wind farm. Floating wind turbines installed in the wind farm interact with each other thought their wakes. The wake of a floating wind turbine is produced because the floating wind turbine extracts energy out of an incoming wind flow. Wake causes a reduced wind speed, also known as a wind deficit, and an increased wind speed variation, also known as a turbulence. These phenomena result in a decrease of an overall power production of the wind farm and an increase of a load for a downstream floating wind turbine. The downstream floating wind turbine denotes a floating wind turbine positioned behind (seen in a wind direction) a front row. The downstream floating wind turbine may operate in the wake. The decrease of power may be a direct result of the lower wind speed, while the increase in the load is a consequence of the turbulences causing vibrations in a mechanical loading of the downstream floating wind turbine.

Non-floating (traditional) wind turbines are positioned and operated such that by a yaw steering, the wake may be, into certain limits, steered away from other wind turbines. This is due to the fact that the yaw steering is the only degree of freedom in traditional wind turbines which may influence the wake.

In the field of floating wind turbines, there are additional degrees of freedom, in total six degrees of freedom, which may allow a more precise wake steering.

Hence, there may be a need to actively position at least two floating wind turbines in a wind farm such that a high power production is maintained and a load at each of the floating wind turbines is low.

In DK 2014 70456 A1 it is proposed to dynamically positioning multiple offshore wind turbines relative to each other where at least one wind turbine is placed on a floating foundation.

The paper KHEIRABADI ALi C ET AL, "Modeling and Power Optimization of Floating Offshore Wind Farms with Yaw and lnduction-based Turbine Repositioning", 2019 AMERICAN CONTROL CONFERENCE (ACC), AMERICAN AUTOMATIC CONTROL COUNCIL, 10 July 2019, pages 5458-5463, investigates the potential of floating offshore wind turbine repositioning with the objective of maximizing the power output of a floating offshore wind farm.

US 2014044541 A1 describes a floating platform anchored to at least one anchor point, including a wind turbine , and a shift device for shifting the wind turbine. The device is configured to shift the wind turbine as a function of a set of parameters, including wind direction (V), in order to minimize the aerodynamic wake effects.

NL 2009682 C2 describes a floating wind turbine comprising a wind turbine arrangement supported by a floating support structure, at least one positioning system for detecting position data of the floating wind turbine at a given time, a transmitting means for transmitting the detected position data to at least one control and/or monitoring system, and the at least one control and/or monitoring system configured to provide processed data from the group of local position data, displacement data, moving speed data, moving direction data of the floating wind turbine based on the position data received by the transmitting means, wherein the at least one positioning system is arranged at the floating support structure.

### Summary of the Invention

This need may be met by the subject matter according to the independent claims. Advantageous embodiments of the present invention are described by the dependent claims.

According to a first aspect of the invention there is provided a control system according to claim 1 for positioning at least two floating wind turbines in a wind farm. The control system comprises a measuring device configured for measuring an incoming wind field at the two wind turbines, a determining device, wherein the determining device is configured for determining a wake property at the two wind turbines, wherein the determining device is configured for determining a propagation path of the wake property through the wind farm based on the determined wake property at the at least two floating wind turbines, wherein the determining device is configured for determining a location for each of the at least two floating wind turbines comprising a minimized wake influence based on the determined propagation path of the wake property through the wind farm, and a repositioning device configured for repositioning each of the two floating wind turbines to the determined location such that a first floating wind turbine of the at least two floating wind turbines is tiltable to a side in a floater roll direction and another floating wind turbine of the at least two floating wind turbines is tiltable to the other side in the floater roll direction.

The described control system is based on the idea to use a wake control such that floating wind turbines may be moved and/or repositioned along with a changed wake propagation direction for an improved park power output. A translation and/or a rotation of a floating wind turbine is/are used for actively repositioning of the floating wind turbine out of each other's wake. Hence, an active wake repositioning may be providable.

This may result in an increase in a wind farm power production along with lower fatigue loads. Therefore, a lower level cost of energy may be possible. An increased overall power production within a wind farm along with lower fatigue loads due to a lower turbulence level may result in a reduced fatigue load such that a structural design may be optimized and therefore costs may be reduced.

A floating wind turbine comprises a floating foundation which may move. By a movement of the floating foundation the floating wind turbine mounted on the floating foundation moves correspondingly. The motion of the floating foundation respectively the floating wind turbine may be divided into six individual degrees of freedom, namely three translations a surge, a sway and a heave, and three rotations a roll, a pitch and a yaw.

Due to similarities in naming between the pitch of the floating foundation and the pitch of the blades, a distinction is made in the following by distinguishing between the floater pitch and the blade pitch. On the one hand, the floater pitch denotes the pitch of the floating foundation around its point of rotation. On the other hand, the blade pitch denotes a controlled pitching of the blades of the floating wind turbine.

Providing the measuring device as a one-piece measuring device may provide the possibility to measure all of the needed values of the incoming wind field with one device. Hence, a cost-efficient way for measuring the incoming wind field may be providable.

Providing the measuring device as a multi part device may provide the possibility that at different positions on the floating wind turbine a value of the incoming wind field may individually be measured such that even at exposed positions a measuring may be possible. Additionally, at positions where a complex incoming wind field for example with respect to a complex vortex system, is expected, a high number of measuring devices may be positioned. Hence, an accurate and detailed distribution of the incoming wind field may be providable.

Providing the determining device as a one-piece determining device, particularly as one device being able of determining the wake property, the propagation path and the location, may provide the possibility that a low-maintenance and easy to install determining device may be providable.

Providing the determining device as a multi part determining device may provide the possibility that a specific determining device may be provided for determining the wake property, the propagation path and/or the location. Hence, an accurate and detailed representation of each of the wake property, the propagation path and/or the location may be providable.

Providing the repositioning device as a one-piece repositioning device may provide the possibility that with one single repositioning device all of the at least two floating wind turbines may be repositioned one after another or all at once. Therefore, a time efficient repositioning of the two floating wind turbines may be providable.

Providing the repositioning device as a multi part repositioning device may provide the possibility that each of the two floating wind turbines may be repositionable individually and accurate.

The wake property may comprise an intensity, a direction and/or a distribution.

The propagation path may denote a mapping of the wake property at each location in the wind farm such that an accurate overall picture of the wake in the wind farm may be providable.

The location for each of the at least two floating wind turbines comprising the minimized wake influence may denote an individual position where each floating wind turbine is exposed to a minimum of wake influence.

According to an exemplary embodiment of the invention, the determining device is further configured for determining the propagation path of the wake property through the wind farm based on a current position and/or a current rotation of the two floating wind turbines.

The current position of the floating wind turbine may denote the specific location inside the wind farm and/or relatively to the other floating wind turbines in the wind farm.

The current rotation of the floating wind turbine may denote a floater pitch angle, a floater yaw angle and/or a floater roll angle deviating from a predetermined value. Hence, an exact alignment of each floating wind turbine may be taken into account for determining the propagation path.

Determining the propagation path based on a current position and/or a current rotation may provide the possibility of providing an accurate mapping of the current wake situation taking into account all of the floating wind turbines.

According to an exemplary embodiment of the invention, the determining device is configured for determining the location for each of the two floating wind turbines by taking into account a maximized power production of each of the two floating wind turbines and/or a minimized load at each of the two floating wind turbines.

A maximized power production may denote a location inside the wind farm where a specific floating wind turbine, if positioned there, provides a higher power production than at another location.

A minimized load may denote a location inside the wind farm where a specific floating wind turbine, if positioned there, is exposed to a lower load than at another location.

Taking into account a minimized wake influence as well as a maximized power production and/or a minimized load, there is provided a possibility to reposition the two floating wind turbines at a location of an overall optimum. Particularly because the location comprising the minimum wake influence must not be the location comprising an acceptable or even a good power production and/or the location where the two floating wind turbines are exposed to minimum or not harmful loads.

According to an exemplary embodiment of the invention, the determining device is configured for determining the location for each of the two floating wind turbines by taking into account at least one external boundary condition.

An external boundary condition may denote a constraint which is not conditioned by the power production of the floating wind turbine itself but rather by either external environmental conditions or by constraints of a fastening structure of the floating wind turbine.

Taking into account at least one external boundary condition may provide the possibility that a damage of the two floating wind turbines may effectively be preventable.

According to a further embodiment of the invention, the external boundary condition comprises at least one of the group consisting of a local water depth, a length of a mooring line, a length of a power cable, an inter-turbine distance, an incoming boat and a sea lane.

Taking into account the local water depth may provide the possibility that a damage due to a running aground may effectively be preventable. The determining device may therefore comprise a sonic depth finder.

Taking into account the length of a mooring line may provide the possibility that harmful tensions in the mooring line and therefore in the fixation of the mooring line at the floating foundation may be effectively preventable. The determining device may therefore comprise a data table in which the mooring line length of an individual floating wind turbine is stored.

Taking into account the length of a power cable may provide the possibility that a breakaway and hence a complete breakdown of a power production of the two floating wind turbines may effectively be preventable. The determining device may therefore comprise a data table in which the power cable length of an individual floating wind turbine is stored.

Taking into account an inter-turbine distance may provide a possibility that a damage of a blade of one floating wind turbine due to a direct or indirect contact with a blade or another substructure of another floating wind turbine may effectively be preventable. The determining device may therefore comprise a visual detection device.

Taking into account an incoming boat may provide the possibility that even if a boat is entering the wind farm which should in a first step be inhibited, a harmful damage of the two floating wind turbines or the boat and thereby personal risk may effectively be inhibited. The determining device may therefore comprise a visual detection device.

Taking into account a sea lane may provide the possibility that a damage of the two floating wind turbines or the boat and thereby personal risk due to a collision with a boat may effectively be preventable. The determining device may therefore comprise a visual detection device.

According to a further exemplary embodiment, the determining device is configured for determining the location for each of the two floating wind turbines by taking into account an individual operating mode of each of the two floating wind turbines.

A floating wind turbine being turned off may have different properties due to an incoming wind field than a running floating wind turbine. The determining device may therefore comprise a sensor detecting an operating mode of the floating wind turbine.

If one floating wind turbine is turned off, the floating wind turbine may be repositioned at a location where the incoming wind field is not harmful to the floating wind turbine. Additionally, the location for the floating wind turbine being turned off may be independently chosen from the power production.

Taking into account the individual operating mode may provide the possibility that an overall power production of the wind farm may be optimized.

According to a further exemplary embodiment, the determining device is configured for determining the location for each of the two floating wind turbines by taking into account a collective state of each of the two floating wind turbines.

A collective state of the two floating wind turbines denote one or more setpoint(s) of all of the at least two floating wind turbines. For example how much power the at least two floating wind turbines should produce. If the wind farm should solely produce 50% of its overall capacity, for example due to the fact that less power may be needed, the determining device may take into account that because it may impact the positioning of the two floating wind turbines.

According to a further exemplary embodiment of the invention, the measuring device comprises a sensor for measuring at least one of a group consisting of a direction, a magnitude and a turbulence of the incoming wind field.

A sensor may denote either a one-piece sensor which may measure one or more properties of the incoming wind field or an arrangement of a plurality of sensors each able of measuring one individual property.

Providing the sensor as a one-piece sensor may provide the possibility that the incoming wind field may be measured in a cost-efficient way.

Providing the arrangement of sensors may provide the possibility that the incoming wind field may be measured at different positions. Therefore, a detailed and profound knowledge of the incoming wind field may be provided.

The direction of the wind field may denote a wind direction at each position in the incoming wind field.

The magnitude may denote the wind intensity at each position in the incoming wind field.

The turbulence may denote a turbulence in the incoming wind field caused by an external influence on the incoming wind field.

According to an exemplary embodiment of the present invention, the determining device comprises at least one of the group consisting of a wind farm drone, a light detection and ranging device (LIDAR) and a radio detection and ranging device (RADAR).

Providing the determining device comprising a wind farm drone may provide the possibility that information on the incoming wind field may be determined additionally or alternatively at positions distanced from the two floating wind turbines. Therefore, a more complete and detailed mapping of the incoming wind field may be provided.

Providing the determining device comprising a light detection and ranging device (LIDAR) may provide the possibility that potential vortices and turbulences may be determined at an early state. Therefore, the determining may be possible before the formation of the turbulence may be visible.

Providing the determining device comprising a radio detection and ranging device (RADAR) may provide the possibility that by means of electromagnetic waves a ranging of a distance and an angle to a vortex and/or a turbulence may be obtained. Additionally, a relative movement between the floating wind turbine and the formation of the vortex and/or the turbulence may be possible.

According to an exemplary embodiment of the invention, the repositioning device comprises a central repositioning device configured for repositioning all of the two floating wind turbines.

Providing a central repositioning device may provide the possibility of maintaining the repositioning device in an easy and cost-efficient way.

According to an exemplary embodiment of the present invention, the repositioning device comprises an automatous underwater vehicle.

Providing an automatous underwater vehicle may provide the possibility for repositioning of the two floating wind turbines. Particularly, one autonomous underwater vehicle may be in charge of several floating wind turbines in one wind farm. Additionally, if more than one automatous underwater vehicles are provided, the two floating wind turbines may be moved along each of or a combination of the surge, the sway, the heave, the roll, the pitch and the yaw.

According to a further embodiment of the invention, the repositioning device comprises a local repositioning device configured for repositioning one of the two floating wind turbines.

Providing a local repositioning device may provide the possibility that the two floating wind turbines may be repositioned individually from each other. Therefore, the two floating wind turbines may be repositioned in a fast and individual way.

According to a further embodiment of the invention, the repositioning device comprises at least one of the group consisting of a blade actuator, a yaw motor actuator, a generator torque actuator, an underwater propeller and a mooring line actuator.

Providing the blade actuator may provide the possibility that an already integrated actuator may additionally be used to fulfil the task of repositioning. Therefore, a cost-efficient possibility of repositioning may be providable.

Providing the yaw motor actuator may provide the possibility that an already integrated actuator may additionally be used to fulfil the task of repositioning. Therefore, a cost-efficient possibility of repositioning may be providable.

Providing the generator torque actuator may provide the possibility that an already integrated actuator may additionally be used to fulfil the task of repositioning. Therefore, a cost-efficient possibility of repositioning may be providable.

Providing the underwater propeller may provide the possibility of a simple and cost-efficient means for repositioning the two floating wind turbines. By providing more than one underwater propeller at the floating foundation, the floating wind turbine may be repositioned in the direction of the surge, the sway and/or the yaw. Additionally, if an underwater propeller is attached to the floating foundation in an inclined manner, a movement in the direction of the pitch and the roll may be possible.

Providing one mooring line actuator attached to each of the mooring lines holding in place the floating wind turbine may provide the possibility to reposition the floating wind turbine along each of or a combination of the surge, the sway, the heave, the roll, the pitch and the yaw.

According to an exemplary embodiment of the present invention, the repositioning device is configured for repositioning the floating wind turbine perpendicularly to the incoming wind field.

Perpendicular to the incoming wind field may denote a translation along the sway, the surge and/or the heave, a rotation along the yaw, the roll and/or the pitch, and/or a combination of a translation and a rotation.

The two floating wind turbines may be moved perpendicular to the incoming wind field by at least one of the above-described repositioning devices.

Repositioning perpendicular to the incoming wind field may provide the possibility of gaining a higher power production even already when moving the two floating wind turbines.

According to a further aspect of the invention there is provided a wind farm. The wind farm comprises at least two floating wind turbines, and an above-described control system.

Also, the described wind farm is based on the idea to use a wake control such that floating wind turbines may be moved and/or repositioned for an improved park power output. A translation and/or a rotation of a floating wind turbine is/are used for actively repositioning of the floating wind turbine out of each other's wake. Hence, an active wake influence repositioning may be providable.

According to a further aspect of the invention there is provided a method according to claim 15 for positioning at least two floating wind turbines in a wind farm. The method comprises (a) measuring an incoming wind field at the two wind turbines, (b) determining a wake property at the two wind turbines, (c) determining a propagation path of the wake property through the wind farm based on the determined wake property at the two floating wind turbines, (d) determining a location for each of the two floating wind turbines comprising a minimized wake influence based on the determined propagation path of the wake property through the wind farm, and (e) repositioning each of the at least two floating wind turbines to the determined location, wherein the repositioning comprises tilting a first floating wind turbine of the at least two floating wind turbines to a side in a floater roll direction and another floating wind turbine of the at least two floating wind turbines to the other side in the floater roll direction.

Also, the described method is based on the idea to use a wake control such that floating wind turbines may be moved and/or repositioned for an improved park power output. A translation and/or a rotation of a floating wind turbine is/are used for actively repositioning of the floating wind turbine out of each other's wake. Hence, an active wake influence repositioning may be providable.

In the following some exemplary ideas of the present invention are described. A floating wind turbine may enable a new solution to wake problems. A floating wind turbine may perform a large translation and/or a large rotation. This may be used to actively wake steering and/or repositioning a floating wind turbine in a wind farm such that wake influences may be avoided or at least reduced. This would potentially increase an annular energy production of the wind farm and may decrease a loading of the floating wind turbine.

Therefore, the following steps are performed: (a) measuring an inflow wind and understanding based on a geometry (a position and alternatively a rotation of each floating wind turbine) how a wake propagates through a wind farm, (b) using an optimization algorithm to calculate a repositioning of each floating wind turbine in the wind farm to a favourable position relative to an optimized power production and/or a reduced loading, and (c) repositioning each of the floating wind turbines.

Measuring the inflow wind may be done in terms of a direction, a magnitude and a turbulence. Additionally, a sensor such as a wind farm drone, a light detection and ranging device (LIDAR) and/or a radio detection and ranging device (RADAR) may be used to scan an incoming wind field for an optimized solution.

Using an optimization algorithm may comprise the following aspects. Based on a siting procedure, a basic park layout is known. The basic park layout may define a baseline/centre location of each floating wind turbine. Additionally, positioning constraints may be given for each floating wind turbine, stating how far a floating wind turbine may move in each direction, based on information such as for example a local water depth, a length of a mooring line, a length of a power cable. Furthermore, a constraint may be given on an inter-turbine distance between two neighbouring floating wind turbines, to ensure a safe spacing between the two neighbouring floating wind turbines. Wind farm boundaries may be provided as well and may be static or dynamic with respect to e.g. an incoming boat and a sailing line. Based on the above-described information, different options exist.

First, an optimal wind farm layout may be computed offline and may be provided to a control system, e.g. in terms of a look-up-table stating an optimal position of each floating wind turbine as a function of a wind farm wind direction and/or a wind farm wind speed.

Second, an online optimization may be performed that may take into account the above-described information and which may additionally or alternatively take into account a floating wind turbine which is stopped and/or a floating wind turbine which is curtailed, a dynamic limitation such as a limit in how a floating wind turbine may move, e.g. due to an actuator limitation and/or a wave, and an effort (e.g. energy) used by an actuator to change from a current position to an optimized position. An online optimization algorithm is run based on the given information, the wind farm wind direction and the wind farm wind speed. The optimization may only be triggered e.g. every 1 to 60 minutes or whenever a wind farm wind speed or wind farm wind direction change(s) more than a predefined threshold.

The control system may determine a new position at a fixed time step (e.g. a time step of 30 seconds to 60 minutes) or whenever a wind farm wind speed and/or a wind farm wind direction have/has changed more than a predefined threshold. Furthermore, it may be calculated how much effort (e.g. energy) may be used by an actuator for changing to the new optimized configuration. If compared to a gain in a power production and a reduction in loads too much is invested, the control system may decide to keep the current configuration or may command the floating wind turbine to move into the optimized configuration.

During repositioning, each of the floating wind turbines may receive information from the control system if the floating wind turbine shall reposition. Each floating wind turbine may then comprise an actuator to control an according moving. The floating wind turbine may have a local control to move (i.e. a distributed control) or a centralized control. The repositioning device could be a blade actuator, a yaw motor, a generator torque and/or an underwater propeller attached to the floating wind turbine and/or an autonomous underwater vehicle (AUV).

By a blade pitch actuator an effective thrust force felt by the floating wind turbine may be changed to move the floating wind turbine in a direction normal to a rotor plane of the floating wind turbine. An individual blade pitching may create an imbalance (e.g. yaw moment) that may be exploited and/or a mooring line actuator may be used to change the direction of the floating wind turbine slightly.

A yaw motor on the floating wind turbine may be used to change an alignment into the wind such that the floating wind turbine may move due to the thrust force along a desired direction.

A generator torque may be used, like the blade pitch actuator, to change an effective thrust felt by the floating wind turbine by modifying a rotor speed.

An underwater propeller attached to the floating wind turbine may be used to manoeuvre the floating wind turbine around while an autonomous underwater vehicle may be docked inside the wind farm and be called upon when a repositioning of the floating wind turbine is needed. The autonomous underwater vehicle may then tow the floating wind turbine to the specific location.

An assumed split between the determining device and the repositioning device may be that the determining device may provide a set point for the floating wind turbine (and a power output) to optimize a wind farm performance, whereas the repositioning device receives these references and may perform a control action to get to the set point in an optimal and safe manner.

A mooring line actuator may be used to make sure that each mooring line is in a favourable configuration during the repositioning. That may be that each mooring line should rather slacking than be hard tensioned.

Furthermore, each of the two floating wind turbines may be moved perpendicular to the incoming wind field. If the blades of the rotor are moved fast enough, the blades could see a more free incoming wind field which may not have been braked by the floating wind turbine. This may lead to a higher power production. The movement perpendicular to the incoming wind field may either be a translation or a tilting of the floating wind turbine back and forth in the floater roll direction.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a wind farm comprising a second floating wind turbine operating inside a wake of a first floating wind turbine according to another exemplary embodiment of the invention.
Figure 2 shows a wind farm comprising a second floating wind turbine operating outside a wake of a first floating wind turbine according to another exemplary embodiment of the invention.
Figure 3 shows a schematic view of a translational repositioning of a floating wind turbine according to an exemplary embodiment of the invention.
Figure 4 shows a schematic view of a rotational repositioning of a floating wind turbine according to an exemplary embodiment of the invention.

### Detailed Description

The illustration in the drawings is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

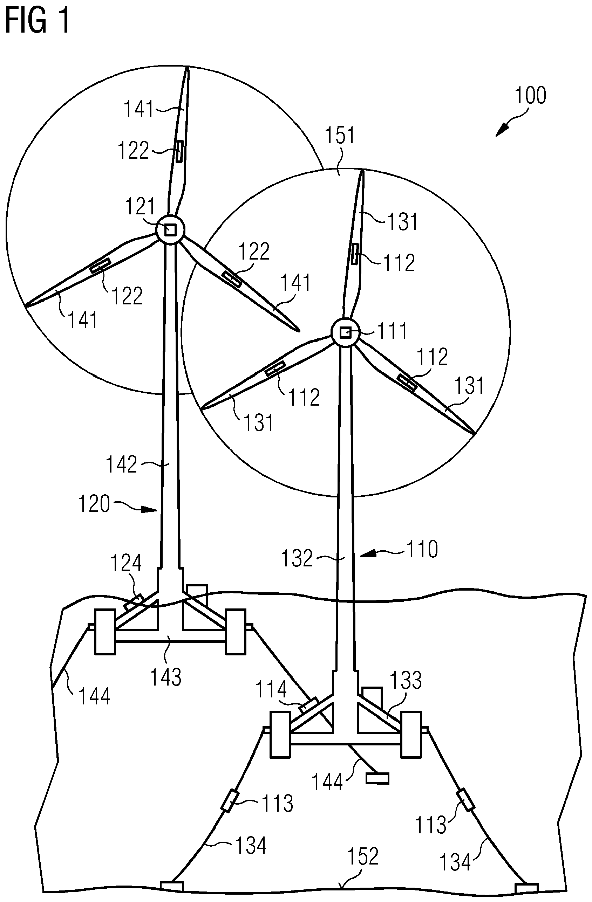

Figure 1 shows a wind farm 100 comprising a second floating wind turbine 120 operating inside a wake property 151 of a first floating wind turbine 110 according to another exemplary embodiment of the invention.

The first floating wind turbine 110 comprises a first floating foundation 133, a first tower 132 mounted to the first floating foundation 133, and three first blades 131 each mounted via a hub and nacelle to the first tower 132. The first floating wind turbine 110 is held in place by two first mooring lines 134 anchored to a sea ground 152.

The second floating wind turbine 120 comprises a second floating foundation 143, a second tower 142 mounted to the second floating foundation 143, and three second blades 141 each mounted via a hub to the second tower 142. The second floating wind turbine 120 is held in place by two second mooring lines 144 (shown schematically in Figure 1) anchored to the sea ground 152.

As illustrated in Figure 1, the second wind turbine 120, particularly the three second blades 141 are operating in the wake property 151 of the three first blades 131 of the first floating wind turbine 110.

The first floating wind turbine 110 comprises a first control system 111 comprising three first measuring devices 112. Each of the three first measuring devices 112 is mounted to one of the three first blades 131. The first control system 111 further comprises a first determining device 114 mounted to the first floating foundation 133 and two first repositioning devices 113. Each of the two first repositioning devices 113 is mounted to one of the two mooring lines 134. Only the two first mooring lines 134 are entirely shown for Figure 1 for clarity reasons.

The second floating wind turbine 120 comprises a second control system 121 comprising three second measuring devices 122. Each of the three second measuring devices 122 is mounted to one of the three second blades 141. The second control system 121 further comprises a second determining device 124 mounted to the second floating foundation 143 and two second repositioning devices (not shown in Figure 1). Each of the two second repositioning devices is mounted to one of the two mooring lines 144, which are solely schematically shown in Figure 1.

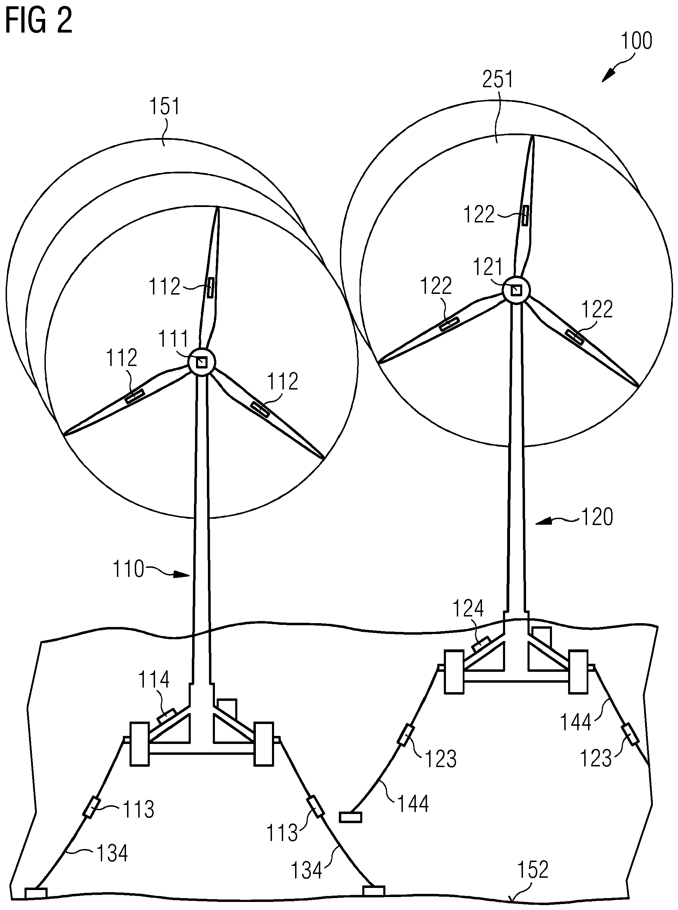

Figure 2 shows a wind farm 100 comprising a second floating wind turbine 120 operating outside a wake property 151 of a first floating wind turbine 110 according to another exemplary embodiment of the invention.

The wind farm 100 is shown in Figure 2 in a further arrangement compared to the wind farm 100 as shown in Figure 1. The second floating wind turbine 120 has measured the incoming wind field by the three second measuring devices 122. Additionally, the first floating wind turbine 110 has measured the incoming wind field with the three first measuring devices 112. The first determining device 114 and the second determining device 124 have determined that the second floating wind turbine 120 is positioned in the wake property 151 of the first floating wind turbine 110 (as shown in Figure 1). Furthermore, the first determining device 114 has determined a first location for the first floating wind turbine 110 and the second determining device 124 has determined a second location for the second floating wind turbine 120. Both the first location and the second location comprising a minimized influence of the wake property 151, 252.

The first floating wind turbine 110 comprises two first repositioning devices 113 one attached to each of the two first mooring lines 134. In Figure 2 there are solely shown in detail two first mooring lines 134 respectively two first repositioning devices 113 for clarity reasons.

The second floating wind turbine 120 is repositioned to the second location by the two second repositioning devices 123, each attached to one of the two second mooring lines 144.

As may be seen in Figure 2, the wake property 151 of the first floating wind turbine 110 and the wake property 251 of the second floating wind turbine 120 are directed such that the wake property 151 and the wake property 251 do not influence the respective other floating wind turbine.

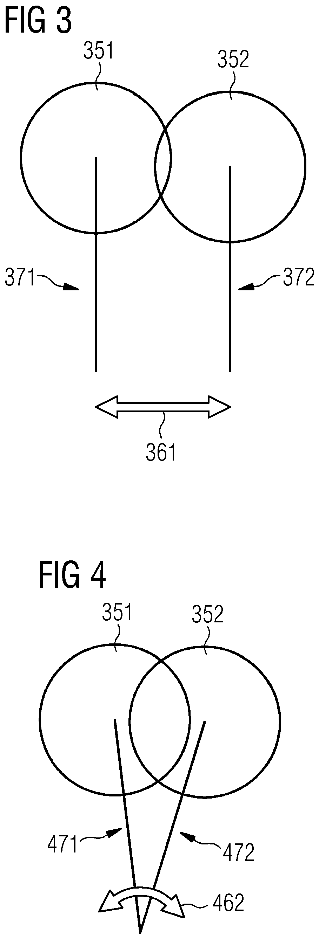

Figure 3 shows a schematic view of a translation 361 of a floating wind turbine according to an exemplary embodiment of the invention.

The floating wind turbine in the first location 371 comprises a wake property 351 and the floating wind turbine in the second location 372 is repositioned along the translation 61 and comprises a wake property 352. As may be seen in Figure 3, the wake property 351 and the wake property 352 interact solely in a small area such that the wake property 351 and the wake property 352 do not influence each other.

Figure 4 shows a schematic view of a rotation 462 of a floating wind turbine according to the invention.

The floating wind turbine in the first location 471 comprises a wake property 351 and is tilted to the side in the floater roll direction by the rotation 462. The floating wind turbine in the second location 472 comprises a wake property 352 and is tilted to the other side in the floater roll direction by the rotation 462. Therefore, as may be seen in Figure 4, the wake property 351 and the wake property 352 interact solely in a small area such that the wake property 351 and the wake property 352 do not influence each other.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Control system (111, 121) for positioning at least two floating wind turbines (110, 120) in a wind farm (100), wherein the control system (111, 121) comprises
a measuring device (112, 122) configured for measuring an incoming wind field at the two floating wind turbines (110, 120),
a determining device (114, 124) configured
for determining a wake property (151, 252, 351, 352) at the two floating wind turbines (110, 120),
for determining a propagation path of the wake property (151, 252, 351, 352) through the wind farm (100) based on the determined wake property (151, 252, 351, 352) at the at least two floating wind turbines (110, 120), and
for determining a location for each of the at least two floating wind turbines (110, 120) comprising a minimized wake influence based on the determined propagation path of the wake property (151, 252, 351, 352) through the wind farm (100), and
a repositioning device (113, 123) configured for repositioning each of the at least two floating wind turbines (110, 120) to the determined location **characterized in that** a first floating wind turbine of the at least two floating wind turbines (110, 120) is tilted to a side in a floater roll direction and another floating wind turbine of the at least two floating wind turbines (110, 120) is tilted to the other side in the floater roll direction.

2. Control system (111, 121) according to claim 1,
wherein the determining device (114, 124) is further configured for determining the propagation path of the wake property (151, 252, 351, 352) through the wind farm (100) based on a current position and/or a current rotation of the two floating wind turbines (110, 120), and/or
wherein the determining device (114, 124) is configured for determining the location for each of the two floating wind turbines (110, 120) by taking into account
a maximized power production of each of the two floating wind turbines (110, 120) and/or a minimized load at each of the two floating wind turbines (110, 120), and/or
an individual operating mode of each of the two floating wind turbines (110, 120).

3. Control system (111, 121) according to any one of the preceding claims, wherein the determining device (114, 124) is configured for determining the location for each of the two floating wind turbines (110, 120) by taking into account at least one external boundary condition, in particular wherein the external boundary condition is a local water depth, a length of a mooring line, and/or an inter-turbine distance.

4. Control system (111, 121) according to any one of the preceding claims,
the determining device (114, 124) comprises a data table in which a power cable length of an individual floating wind turbine is stored, and
wherein the determining device (114, 124) is configured for determining the location for each of the two floating wind turbines (110, 120) by taking into account at least a length of a power cable as an external boundary condition such that a breakaway and a complete breakdown of a power production of the two floating wind turbines is prevented.

5. Control system (111, 121) according to any one of the preceding claims,
wherein the determining device (114, 124) is configured for determining the location for each of the two floating wind turbines (110, 120) by taking into account at least an incoming boat such that a harmful damage of the two floating wind turbines (110, 120) or of the boat is inhibited,
in particular wherein the determining device (114, 124) therefor comprises a visual detection device.

6. Control system (111, 121) according to one of the claims 3 to 5, wherein the external boundary condition is a sea lane.

7. Control system (111, 121) according to any one of the preceding claims, wherein the measuring device (112, 122) comprises a sensor for measuring at least one of a group consisting of a direction, a magnitude and a turbulence of the incoming wind field.

8. Control system (111, 121) according to any one of the preceding claims, wherein the determining device (114, 124) comprises at least one of the group consisting of a wind farm drone, a light detection and ranging device, and a radio detection and ranging device.

9. Control system (111, 121) according to any one of the preceding claims, wherein the repositioning device (113, 123) comprises a central repositioning device (113, 123) configured for repositioning all of the two floating wind turbines (110, 120).

10. Control system (111, 121) according to any one of the preceding claims, wherein the repositioning device (113, 123) comprises an automatous underwater vehicle.

11. Control system (111, 121) according to any one of the preceding claims, wherein the repositioning device (113, 123) comprises a local repositioning device (113, 123) configured for repositioning one of the two floating wind turbines (110, 120) .

12. Control system (111, 121) according to claim 11, wherein the repositioning device (113, 123) comprises at least one of the group consisting of a blade actuator, a yaw motor actuator, a generator torque actuator, an underwater propeller and a mooring line actuator.

13. Control system (111, 121) according to any one of the preceding claims, wherein the repositioning device (113, 123) is configured for repositioning each of the floating wind turbines (110, 120) perpendicularly to the incoming wind field.

14. Wind farm (100) comprising at least two floating wind turbines (110, 120), and a control system (111, 121) according to any one of the preceding claims.

15. Method for positioning at least two floating wind turbines (110, 120) in a wind farm (100), wherein the method comprises
measuring an incoming wind field at the two floating wind turbines (110, 120),
determining a wake property (151, 252, 351, 352) at the two floating wind turbines (110, 120),
determining a propagation path of the wake property (151, 252, 351, 352) through the wind farm (100) based on the determined wake property (151, 252, 351, 352) at the at least two floating wind turbines (110, 120),
determining a location for each of the at least two floating wind turbines (110, 120) comprising a minimized wake influence based on the determined propagation path of the wake property (151, 252, 351, 352) through the wind farm (100),
repositioning each of the at least two floating wind turbines (110, 120) to the determined location,
**characterized in that**
the repositioning comprises tilting a first floating wind turbine of the at least two floating wind turbines (110, 120) to a side in a floater roll direction and another floating wind turbine of the at least two floating wind turbines (110, 120) to the other side in the floater roll direction.

## Patentansprüche

1. Steuersystem (111, 121) zum Positionieren von mindestens zwei schwimmenden Windkraftanlagen (110, 120) in einem Windpark (100), wobei das Steuersystem (111, 121) umfasst
eine Messvorrichtung (112, 122), die zum Messen eines ankommenden Windfeldes an den beiden schwimmenden Windkraftanlagen (110, 120) konfiguriert ist,
eine Bestimmungsvorrichtung (114, 124), die konfiguriert ist zum Bestimmen einer Nachlaufeigenschaft (151, 252, 351, 352) an den beiden schwimmenden Windkraftanlagen (110, 120),
zum Bestimmen eines Ausbreitungspfades der Nachlaufeigenschaft (151, 252, 351, 352) durch den Windpark (100) auf Grundlage der bestimmten Nachlaufeigenschaft (151, 252, 351, 352) an den mindestens zwei schwimmenden Windkraftanlagen (110, 120), und zum Bestimmen eines Standortes für jede der mindestens zwei schwimmenden Windkraftanlagen (110, 120), der einen minimierten Nachlaufeinfluss umfasst, auf Grundlage des bestimmten Ausbreitungspfades der Nachlaufeigenschaft (151, 252, 351, 352) durch den Windpark (100), und
eine Neupositionierungsvorrichtung (113, 123), die zum Neupositionieren jeder der mindestens zwei schwimmenden Windkraftanlagen (110, 120) an den bestimmten Standort konfiguriert ist, **dadurch gekennzeichnet, dass** eine erste schwimmende Windkraftanlage der mindestens zwei schwimmenden Windkraftanlagen (110, 120) zu einer Seite in einer Schwimmkörper-Rollrichtung geneigt wird und eine andere schwimmende Windkraftanlage der mindestens zwei schwimmenden Windkraftanlagen (110, 120) zu der anderen Seite in der Schwimmkörper-Rollrichtung geneigt wird.

2. Steuersystem (111, 121) nach Anspruch 1,
wobei die Bestimmungsvorrichtung (114, 124) ferner konfiguriert ist, um den Ausbreitungsweg der Nachlaufeigenschaft (151, 252, 351, 352) durch den Windpark (100) auf Grundlage einer aktuellen Position und/oder einer aktuellen Drehung der beiden schwimmenden Windkraftanlagen (110, 120) zu bestimmen, und/oder wobei die Bestimmungsvorrichtung (114, 124) konfiguriert ist, um den Standort für jede der beiden schwimmenden Windkraftanlagen (110, 120) zu bestimmen unter Berücksichtigung einer maximierten Leistungserzeugung jeder der zwei schwimmenden Windkraftanlagen (110, 120) und/oder einer minimierten Last an jeder der zwei schwimmenden Windkraftanlagen (110, 120), und/oder
eines individuellen Betriebsmodus jeder der beiden schwimmenden Windkraftanlagen (110, 120).

3. Steuersystem (111, 121) nach einem der vorhergehenden Ansprüche, wobei die Bestimmungsvorrichtung (114, 124) konfiguriert ist, um den Standort für jede der beiden schwimmenden Windkraftanlagen (110, 120) unter Berücksichtigung mindestens einer externen Grenzbedingung zu bestimmen, wobei es sich bei der externen Grenzbedingung insbesondere um eine lokale Wassertiefe, eine Länge einer Verankerungsleine und/oder einen Abstand zwischen den Windkraftanlagen handelt.

4. Steuersystem (111, 121) nach einem der vorhergehenden Ansprüche,
wobei die Bestimmungsvorrichtung (114, 124) eine Datentabelle umfasst, in der eine Stromkabellänge einer einzelnen schwimmenden Windkraftanlage gespeichert ist, und
wobei die Bestimmungsvorrichtung (114, 124) konfiguriert ist, um den Standort für jede der beiden schwimmenden Windkraftanlagen (110, 120) unter Berücksichtigung zumindest einer Länge eines Stromkabels als externe Grenzbedingung so zu bestimmen, dass ein Abreißen und ein vollständiger Ausfall einer Stromerzeugung der beiden schwimmenden Windkraftanlagen verhindert wird.

5. Steuersystem (111, 121) nach einem der vorhergehenden Ansprüche,
wobei die Bestimmungsvorrichtung (114, 124) konfiguriert ist, um den Standort für jede der beiden schwimmenden Windkraftanlagen (110, 120) unter Berücksichtigung zumindest eines ankommenden Bootes so zu bestimmen, dass eine Schadwirkung auf die beiden schwimmenden Windkraftanlagen (110, 120) oder auf das Boot abgewendet wird,
wobei die Bestimmungsvorrichtung (114, 124) hierfür insbesondere eine optische Erkennungsvorrichtung umfasst.

6. Steuersystem (111, 121) nach einem der Ansprüche 3 bis 5, wobei es sich bei der äußeren Grenzbedingung um eine Fahrrinne handelt.

7. Steuersystem (111, 121) nach einem der vorhergehenden Ansprüche, wobei die Messvorrichtung (112, 122) einen Sensor zum Messen mindestens eines aus einer Gruppe bestehend aus einer Richtung, einer Stärke und einer Turbulenz des ankommenden Windfeldes umfasst.

8. Steuersystem (111, 121) nach einem der vorhergehenden Ansprüche, wobei die Bestimmungsvorrichtung (114, 124) mindestens eines aus der Gruppe bestehend aus einer Windparkdrohne, einer Lichtabstandsmessvorrichtung und einer Funkabstandsmessvorrichtung umfasst.

9. Steuersystem (111, 121) nach einem der vorhergehenden Ansprüche, wobei die Neupositionierungsvorrichtung (113, 123) eine zentrale Neupositionierungsvorrichtung (113, 123) umfasst, die zum Neupositionieren aller zwei schwimmenden Windkraftanlagen (110, 120) konfiguriert ist.

10. Steuersystem (111, 121) nach einem der vorhergehenden Ansprüche, wobei die Neupositionierungsvorrichtung (113, 123) ein automatisches Unterwasserfahrzeug umfasst.

11. Steuersystem (111, 121) nach einem der vorhergehenden Ansprüche, wobei die Neupositionierungsvorrichtung (113, 123) eine lokale Neupositionierungsvorrichtung (113, 123) umfasst, die zum Neupositionieren einer der beiden schwimmenden Windkraftanlagen (110, 120) konfiguriert ist.

12. Steuersystem (111, 121) nach Anspruch 11, wobei die Neupositionierungsvorrichtung (113, 123) mindestens eines aus der Gruppe bestehend aus einem Blattaktuator, einem Giermotoraktuator, einem Generatormomentaktuator, einem Unterwasserpropeller und einem Verankerungsleinenaktuator umfasst.

13. Steuersystem (111, 121) nach einem der vorhergehenden Ansprüche, wobei die Neupositionierungsvorrichtung (113, 123) zum Neupositionieren jeder der schwimmenden Windkraftanlagen (110, 120) senkrecht zu dem ankommenden Windfeld konfiguriert ist.

14. Windpark (100), der mindestens zwei schwimmende Windkraftanlagen (110, 120) und ein Steuersystem (111, 121) nach einem der vorhergehenden Ansprüche umfasst.

15. Verfahren zum Positionieren von mindestens zwei schwimmenden Windkraftanlagen (110, 120) in einem Windpark (100), wobei das Verfahren umfasst
Messen eines ankommenden Windfeldes an den beiden schwimmenden Windkraftanlagen (110, 120),
Bestimmen einer Nachlaufeigenschaft (151, 252, 351, 352) an den beiden schwimmenden Windkraftanlagen (110, 120),
Bestimmen eines Ausbreitungspfades der Nachlaufeigenschaft (151, 252, 351, 352) durch den Windpark (100) auf Grundlage der bestimmten Nachlaufeigenschaft (151, 252, 351, 352) an den mindestens zwei schwimmenden Windkraftanlagen (110, 120),
Bestimmen eines Standortes für jede der mindestens zwei schwimmenden Windkraftanlagen (110, 120), der einen minimierten Nachlaufeinfluss umfasst, auf Grundlage des bestimmten Ausbreitungspfades der Nachlaufeigenschaft (151, 252, 351, 352) durch den Windpark (100),
Neupositionieren jeder der mindestens zwei schwimmenden Windkraftanlagen (110, 120) an den bestimmten Standort, **dadurch gekennzeichnet, dass**
das Neupositionieren Kippen einer ersten schwimmenden Windkraftanlage der mindestens zwei schwimmenden Windkraftanlagen (110, 120) zu einer Seite in einer Schwimmkörper-Rollrichtung und einer anderen schwimmenden Windkraftanlage der mindestens zwei schwimmenden Windkraftanlagen (110, 120) zu der anderen Seite in der Schwimmkörper-Rollrichtung umfasst.

## Revendications

1. Système de commande (111, 121) pour positionner au moins deux éoliennes flottantes (110, 120) dans un parc éolien (100), dans lequel le système de commande (111, 121) comprend :
un dispositif de mesure (112, 122) configuré pour mesurer un champ de vent arrivant au niveau des deux éoliennes flottantes (110, 120) ;
un dispositif de détermination (114, 124) configuré :
pour déterminer une propriété de sillage (151, 252, 351, 352) au niveau des deux éoliennes flottantes (110, 120) ;
pour déterminer une voie de propagation de la propriété de sillage (151, 252, 351, 352) sur l'ensemble du parc éolien (100) sur la base de la propriété de sillage déterminée (151, 252, 351, 352) au niveau des au moins deux éoliennes flottantes (110, 120) ; et
pour déterminer une localisation pour chacune des au moins deux éoliennes flottantes (110, 120) comprenant une influence de sillage minimisée sur la base de la voie de propagation déterminée de la propriété de sillage (151, 252, 351, 352) sur l'ensemble du parc éolien (100) ; et
un dispositif de repositionnement (113, 123) configuré pour repositionner chacune des au moins deux éoliennes flottantes (110, 120) au niveau de la localisation déterminée,
**caractérisé en ce qu'**une première éolienne flottante des au moins deux éoliennes flottantes (110, 120) est inclinée sur un côté dans une direction de roulis de flotteur et une autre éolienne flottante des au moins deux éoliennes flottantes (110, 120) est inclinée sur l'autre côté dans la direction de roulis de flotteur.

2. Système de commande (111, 121) selon la revendication 1, dans lequel :
le dispositif de détermination (114, 124) est en outre configuré pour déterminer la voie de propagation de la propriété de sillage (151, 252, 351, 352) sur l'ensemble du parc éolien (100) sur la base d'une position courante et/ou d'une rotation courante des deux éoliennes flottantes (110, 120) ; et/ou dans lequel :
le dispositif de détermination (114, 124) est configuré pour déterminer la localisation pour chacune des deux éoliennes flottantes (110, 120) en prenant en compte :
une production de puissance maximisée de chacune des deux éoliennes flottantes (110, 120) et/ou une charge minimisée au niveau de chacune des deux éoliennes flottantes (110, 120) ; et/ou
un mode de fonctionnement individuel de chacune des deux éoliennes flottantes (110, 120).

3. Système de commande (111, 121) selon l'une quelconque des revendications précédentes, dans lequel le dispositif de détermination (114, 124) est configuré pour déterminer la localisation pour chacune des deux éoliennes flottantes (110, 120) en prenant en compte au moins une condition aux limites extérieures, en particulier dans lequel la condition aux limites extérieures est une profondeur d'eau locale, une longueur d'une ligne de mouillage et/ou une distance inter-éoliennes.

4. Système de commande (111, 121) selon l'une quelconque des revendications précédentes, dans lequel :
le dispositif de détermination (114, 124) comprend une table de données dans laquelle une longueur de câble d'alimentation d'une éolienne flottante individuelle est stockée ; et dans lequel :
le dispositif de détermination (114, 124) est configuré pour déterminer la localisation pour chacune des deux éoliennes flottantes (110, 120) en prenant en compte au moins une longueur d'un câble d'alimentation en tant que condition aux limites extérieures de telle sorte qu'une interruption et un arrêt complet d'une production de puissance des deux éoliennes flottantes soient empêchés.

5. Système de commande (111, 121) selon l'une quelconque des revendications précédentes, dans lequel :
le dispositif de détermination (114, 124) est configuré pour déterminer la localisation pour chacune des deux éoliennes flottantes (110, 120) en prenant en compte au moins un bateau arrivant de telle sorte qu'un dommage préjudiciable des deux éoliennes flottantes (110, 120) ou du bateau soit inhibé ; en particulier dans lequel :
le dispositif de détermination (114, 124) afférent comprend un dispositif de détection visuelle.

6. Système de commande (111, 121) selon l'une quelconque des revendications 3 à 5, dans lequel la condition aux limites extérieures est une voie de navigation maritime.

7. Système de commande (111, 121) selon l'une quelconque des revendications précédentes, dans lequel le dispositif de mesure (112, 122) comprend un capteur pour mesurer au moins une grandeur parmi un groupe constitué par une direction, une amplitude et une turbulence du champ de vent arrivant.

8. Système de commande (111, 121) selon l'une quelconque des revendications précédentes, dans lequel le dispositif de détermination (114, 124) comprend au moins un moyen parmi le groupe constitué par un drone de parc éolien, un dispositif de détection par télémétrie et un dispositif de détection par radiotélémétrie.

9. Système de commande (111, 121) selon l'une quelconque des revendications précédentes, dans lequel le dispositif de repositionnement (113, 123) comprend un dispositif de repositionnement global (113, 123) configuré pour repositionner l'ensemble des deux éoliennes flottantes (110, 120).

10. Système de commande (111, 121) selon l'une quelconque des revendications précédentes, dans lequel le dispositif de repositionnement (113, 123) comprend un véhicule sous-marin automatique.

11. Système de commande (111, 121) selon l'une quelconque des revendications précédentes, dans lequel le dispositif de repositionnement (113, 123) comprend un dispositif de repositionnement local (113, 123) configuré pour repositionner l'une des deux éoliennes flottantes (110, 120).

12. Système de commande (111, 121) selon la revendication 11, dans lequel le dispositif de repositionnement (113, 123) comprend au moins un moyen parmi le groupe constitué par un actionneur de pale(s), un actionneur de moteur d'orientation en termes de lacet, un actionneur de couple de générateur, un organe de propulsion sous-marin et un actionneur de ligne de mouillage.

13. Système de commande (111, 121) selon l'une quelconque des revendications précédentes, dans lequel le dispositif de repositionnement (113, 123) est configuré pour repositionner chacune des éoliennes flottantes (110, 120) perpendiculairement au champ de vent arrivant.

14. Parc éolien (100) comprenant au moins deux éoliennes flottantes (110, 120) et un système de commande (111, 121) selon l'une quelconque des revendications précédentes.

15. Procédé pour positionner au moins deux éoliennes flottantes (110, 120) dans un parc éolien (100), dans lequel le procédé comprend :
la mesure d'un champ de vent arrivant au niveau des deux éoliennes flottantes (110, 120) ;
la détermination d'une propriété de sillage (151, 252, 351, 352) au niveau des deux éoliennes flottantes (110, 120) ;
la détermination d'une voie de propagation de la propriété de sillage (151, 252, 351, 352) sur l'ensemble du parc éolien (100) sur la base de la propriété de sillage déterminée (151, 252, 351, 352) au niveau des au moins deux éoliennes flottantes (110, 120) ;
la détermination d'une localisation pour chacune des au moins deux éoliennes flottantes (110, 120) comprenant une influence de sillage minimisée sur la base de la voie de propagation déterminée de la propriété de sillage (151, 252, 351, 352) sur l'ensemble du parc éolien (100) ; et
le repositionnement de chacune des au moins deux éoliennes flottantes (110, 120) au niveau de la localisation déterminée,
**caractérisé en ce que** le repositionnement comprend l'inclinaison d'une première éolienne flottante des au moins deux éoliennes flottantes (110, 120) sur un côté dans une direction de roulis de flotteur et d'une autre éolienne flottante des au moins deux éoliennes flottantes (110, 120) sur l'autre côté dans la direction de roulis de flotteur.
